# EUROPEAN PATENT APPLICATION

(11) **EP 1 413 409 A2**
(43) Date of publication of application: **28.04.2004**
(21) Application number: 03023887.7
(22) Date of filing: 21.10.2003
(51) Int. Cl.: B27D 5/00

(54) **Machine for processing wood panels or similar**

(30) Priority: 23.10.2002 IT bo20020667
(71) Applicant: BIESSE S.p.A., 61100 Pesaro (IT)
(72) Inventor: Bernardi, Paolo, 40138 Bologna (IT)
(74) Representative: Cerbaro, Elena, Dr.

(57) **Abstract**

A machine for processing wood panels (2) or similar has at least one work table (14) defining a supporting surface (P) for at least one panel (2); at least one edging unit (18) for edging the panel (2); a first and a second actuating device for moving the work table (14) and the edging unit (18) with respect to each other in a first and, respectively, second direction (6, 10) crosswise to each other and parallel to the supporting surface (P); and a third actuating device for moving the work table (14) about an axis of rotation (15) perpendicular to the supporting surface (P).

## Description

The present invention relates to a machine for processing wood panels or similar.

More specifically, the present invention relates to a machine for processing wood panels or similar, of the type comprising at least one work table defining a supporting surface for at least one panel and movable in a first direction substantially parallel to the supporting surface; and at least one edging unit for applying an edging strip to an edge of the panel, and which is movable in a second direction substantially parallel to the supporting surface and crosswise to the first direction, as well as about an axis of rotation substantially perpendicular to the supporting surface, so that, by combining the movements of the work table and edging unit in the first and, respectively second direction, and the movements of the edging unit about the axis of rotation, the edging unit engages the whole edge of the panel.

As the edging unit is moved in the second direction and about the axis of rotation, the edging strip is unwound off a reel housed inside a store, which is normally mounted in a fixed position in the second direction, and has a cutting device for cutting the edging strip off the reel once the strip length required to edge the panel is reached.

Once the edging strip is cut off the reel, a relatively long portion of the strip therefore projects outwards of the edging unit, and may flap as the edging unit moves about the axis of rotation.

The above drawback is partly solved by a machine for processing wood panels or similar, comprising a fixed edging unit; and a gripping unit having a number of suction cups for engaging the top surface of the panel, and which is movable in two substantially horizontal directions crosswise to each other, as well as about a substantially vertical axis of rotation perpendicular to said directions, so that, by combining the movements of the gripping unit in the two directions and about the axis of rotation, the whole edge of the panel is moved through the edging unit.

A major drawback of known gripping units of the type described above, however, lies in their failing to ensure firm grip of the panel, and possibly also flexing the panel, so that the edging strip is not applied properly.

It is an object of the present invention to provide a machine for processing wood panels or similar, designed to eliminate the aforementioned drawbacks, and which is also cheap and easy to produce.

According to the present invention, there is provided a machine for processing wood panels or similar, comprising at least one work table defining a supporting surface for at least one panel having an edge substantially crosswise to the supporting surface; at least one edging unit for applying an edging strip to said edge; and first and second actuating means for moving the work table and the edging unit with respect to each other in a first and, respectively, second direction substantially crosswise to each other and parallel to said supporting surface; characterized by also comprising third actuating means for moving said work table about an axis of rotation substantially perpendicular to said supporting surface.

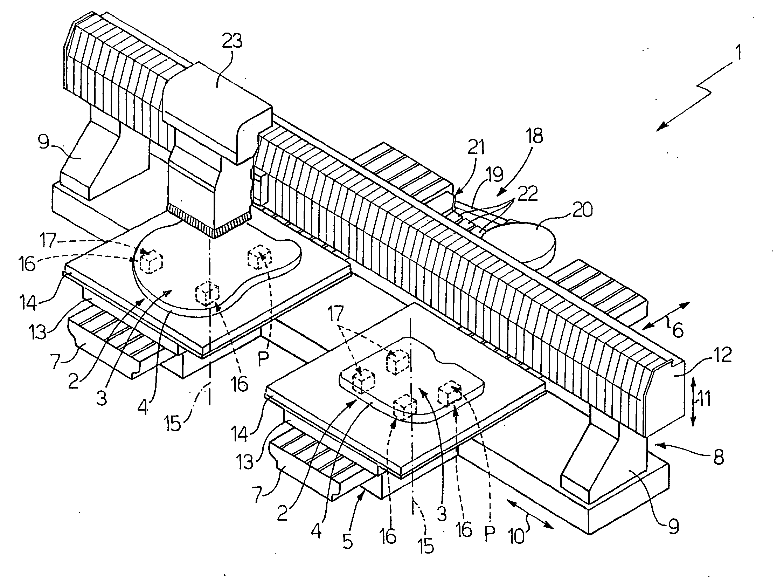

The present invention will be described with reference to the accompanying drawing, which shows a schematic view in perspective of a non-limiting embodiment.

Number 1 in the accompanying drawing indicates as a whole a machine for processing substantially flat wood panels 2 or similar, each of which comprises two parallel major lateral faces 3, and a contoured lateral edge 4 substantially crosswise to faces 3.

Machine 1 comprises an elongated bed 5 extending in a given direction 6, and having two longitudinal guide members 7 parallel to each other and to direction 6; and a gantry-type frame 8, in turn comprising two uprights 9, which are located on opposite sides of longitudinal members 7 in a horizontal direction 10 crosswise to direction 6, and extend in a vertical direction 11 perpendicular to directions 6 and 10, and a cross member 12 extending over bed 5 in direction 10.

Each longitudinal member 7 supports a slide 13, which is fitted in known manner to longitudinal member 7, and is moved linearly in direction 6 along longitudinal member 7 by a known actuating device not shown. Slide 13 in turn supports a work table 14 fitted in rotary manner to slide 13, and rotated, with respect to slide 13 and by a known actuating device not shown, about a substantially vertical axis 15 of rotation parallel to direction 11.

Table 14 has a number of supporting blocks 16, the arrangement of which, on table 14, substantially depends on the size of, and the operations to be performed on, panels 2. Each block 16 is defined at the top by a top supporting surface 17 defining, with surfaces 17 of the other blocks 16, a supporting surface P for at least one panel 2.

Cross member 12 supports a known edging unit 18 for applying an edging strip 19 to at least part of edge 4, and which is fitted in known manner to cross member 12, and is moved linearly in direction 10 along cross member 12 by a known actuating device not shown. Unit 18 comprises a number of pairs of known counter-rotating rollers (not shown) for unwinding edging strip 19 off a reel (not shown) housed inside a store 20 movable in direction 10 together with unit 18; a cutting device (not shown) located at the output of store 20 to cut off the portion of edging strip 19 required to edge panel 2; an applicator 21 for applying and stabilizing edging strip 19 on edge 4; and a number of operating units 22 arranged in series in direction 10 to perform finishing operations, e.g. trimming, cornering, rounding, on edging strip 19.

In connection with the above, it should be pointed out that store 20 normally comprises a heating device (not shown) for heating edging strip 19 issuing from store 20, to deform edging strip 19 at the curved portions of edge 4.

Cross member 12 also supports a milling and/or drilling head 23, which is fitted to cross member 12 on the opposite side to edging unit 18 in direction 6, is fitted in known manner to cross member 12 to move linearly in direction 10 along cross member 12 under control of a known actuating device not shown, and provides for milling and/or drilling panels 2.

In actual use, by combining the movements of edging unit 18 in direction 10, and the movements of work table 14 in direction 6 and about axis 15, the whole of edge 4 engages edging unit 18 and is applied with relative edging strip 19.

Since edging unit 18 is only movable in direction 10 and together with store 20, machine 1 has the advantage that, when edging strip 19 is cut off the reel (not shown), the portion of edging strip 19 projecting outwards of applicator 21 is relatively short, with no possibility of flapping.

Machine 1 also has the advantage of a relatively short time interval between heating edging strip 19 issuing from store 20, and applying it to edge 4.

In a variation not shown, store 20 and the cutting device (not shown) are fitted to gantry-type frame 8 in a fixed position in direction 10, so that, during the edging operation, edging unit 18 and store 20 are only moved with respect to each other in direction 10. This variation therefore also has the advantage, mentioned above, of preventing the portion of edging strip 19 projecting outwards of applicator 21 from flapping when edging strip 19 is cut off the reel (not shown).

## Claims

1. A machine for processing wood panels (2) or similar, comprising at least one work table (14) defining a supporting surface (P) for at least one panel (2) having an edge (4) substantially crosswise to the supporting surface (P); at least one edging unit (18) for applying an edging strip (19) to said edge (4); and first and second actuating means for moving the work table (14) and the edging unit (18) with respect to each other in a first and, respectively, second direction (6, 10) substantially crosswise to each other and parallel to said supporting surface (P); **characterized by** also comprising third actuating means for moving said work table (14) about an axis of rotation (15) substantially perpendicular to said supporting surface (P).

2. A machine as claimed in Claim 1, wherein said first actuating means move said work table (14) in said first direction (6).

3. A machine as claimed in Claim 1 or 2, wherein said second actuating means move said edging unit (18) in said second direction (10).

4. A machine as claimed in any one of the foregoing Claims, and also comprising at least one milling and/or drilling unit (23) for machining said panel (2).

5. A machine as claimed in any one of the foregoing Claims, and also comprising a cutting device for cutting said edging strip (19) off a respective reel; said reel being movable in said second direction (10) together with said edging unit (18).

6. A machine as claimed in any one of Claims 1 to 4, and also comprising a cutting device for cutting said edging strip (19) off a respective reel; said reel being a fixed reel in said second direction (10).

7. A machine as claimed in any one of the foregoing Claims, and comprising two said work tables (14), each for supporting a respective said panel (2).
